Europäisches Patentamt

(19) European Patent Office    (11) Publication number: **0 064 314**

Office européen des brevets    **B1**

(12)    **EUROPEAN PATENT SPECIFICATION**

(45) Date of publication of patent specification: **12.12.84**    (51) Int. Cl.³: **A 01 J 25/15**

(21) Application number: **82200497.4**

(22) Date of filing: **26.04.82**

(54) Device for pressing curd to form cheese.

| | |
|---|---|
| (30) Priority: **01.05.81 NL 8102152** | (73) Proprietor: **Geessink, Bernard Theodoor** <br> **Frans Halslaan 5** <br> **NL-9581 EX Musselkanaal (NL)** |
| (43) Date of publication of application: <br> **10.11.82 Bulletin 82/45** | |
| | (72) Inventor: **Geessink, Bernard Theodoor** <br> **Frans Halslaan 5** <br> **NL-9581 EX Musselkanaal (NL)** |
| (45) Publication of the grant of the patent: <br> **12.12.84 Bulletin 84/50** | |
| | (74) Representative: **de Wit, Gerard Frederik, Ir. et al** <br> **Breitnerlaan 146** <br> **NL-2596 HG Den Haag (NL)** |
| (84) Designated Contracting States: <br> **AT BE CH DE FR GB IT LI LU NL SE** | |
| (56) References cited: <br> **FR-A-2 308 582** <br> **US-A-4 045 152** | |

Courier Press, Leamington Spa, England.

## Description

The invention relates to a device for pressing curd to form cheese, provided with a number of cheese vats and compressing plungers, a vertically movable actuating member for said plungers, spring members between the actuating member and each plunger and a means for each plunger for limiting the movement of the plunger with respect to said actuating member, such that the spring means are mechanically biased. Such a device is known the United States Patent Specification 4.045.152 to H. J. Peterson et al.

In this known device the plungers are each connected to a central rod having a cotter pin to restrict the distance between the plunger and the actuating member, a coil spring surrounding the central rod. Said coil spring is such dimensioned that it is compressed somewhat when no force is exerted on the plunger. When the plunger is pressed down it can move towards the actuation member over a distance which in practice is only limited when the turns of the coil spring engage each other.

Further the central rod is only guided over a rather small distance at the side of the actuation member, so that it is difficult to obtain an exact location of the plunger.

Coil springs exert apart from an axial thrust in many cases also a tilting momentum.

Finally the bias of the springs is obtained by means of the said cotter pins, which is normally a construction of limited robustness.

The invention aims to improve the known device in the above indicated respects.

Further with the known device the final height of the pressed curd or the cheese is not really limited by the plungers and their actuation because the springs can yield almost unlimited. For that reason it is desired to limit the yielding of the plungers.

The invention provides a robust and reliable construction allowing for a high degree of uniformity of the cheese made, which have little height differences and practically no obliqueness of the upper surfaces.

Accordingly the invention provides that the actuating member is provided with two vertically downwardly extending first wall shaped legs for each plunger, that each plunger is provided with two vertically upwardly extending second wall shaped legs adjacent and parallel to said first legs and that in the first or the second legs a vertically extending slit is present, wherewith the second or first legs respectively are provided with a horizontal pin protruding through said slits.

A further elaboration of the invention giving an even better stability provides that each set of two wall shaped first legs are part of an U-shaped bracket mounted to the lower side of said actuation member, the horizontal pin being mounted in said first legs of the related bracket and said vertical slits, through which the pin passes, being applied in the said second legs, the said second legs being located within said first legs.

With the invention the spring means preferably consist of dish springs, because such springs given an axial thrust without tilting momentum.

In a device of the type of the invention pressing of curd normally occurs according to a predetermined time-force function. In order to obtain a well closed cheese rind it is, when using the invention, to be preferred to bias the spring means in such a way that they will yield in case of an equable load of the plungers before the maximum pressing force is exerted on said actuating member.

For many European cheeses the maximum pressure to be exerted on the curd is in the region of 300—400 g/cm$^2$, so that the bias of the spring means has to be such that they yield at lower pressures but still can be compressed somewhat when the maximum pressure occurs. Adaption is easily possible by adding or removing one or a few dish spring members.

The invention in the following is elucidated on hand of the drawing in which:—

Figure 1 shows schematically a front view of a cheese press according to the invention,

Figure 2 shows a detail on a larger scale, partly in cross-section; and

Figure 3 shows a cross-section over the line III—III of figure 2.

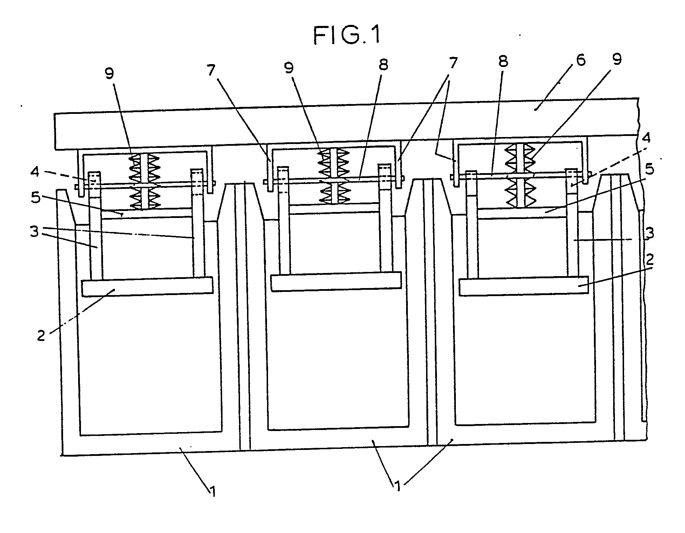

In figure 1 a number of cheese vats 1 is indicated which are positioned in a row. A press contains for instance three such rows.

Each of the vats cooperates with a plunger 2, provided with vertically upright wall shaped legs or members 3 in which slits 4 are present. The members 3 are connected to each other by a board 5.

A plate shaped press member 6, that for pressing cheeses is actuated with a predetermined programmed vertical force, which for instance is generated pneumatically, is provided with pairs of brackets or wall shaped legs 7. In each bracket 7 a pin 8 is mounted protruding through slits 4. On the board 5 a dish spring 9 rests, which at its upper side engages plate member 6.

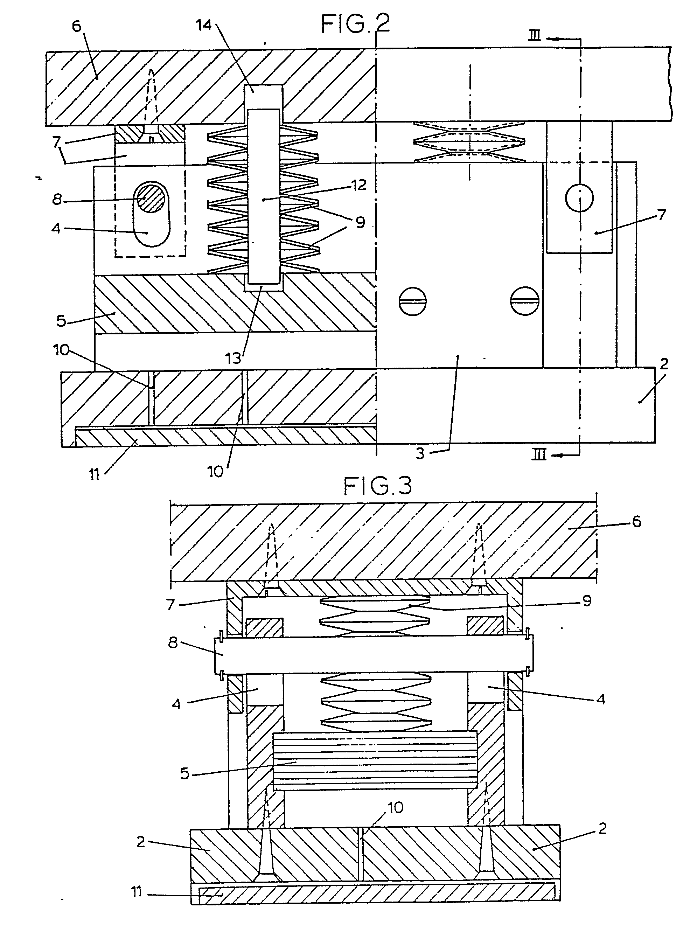

In figures 2 and 3 the same parts are indicated with the same references and some further details are shown which in the following will be elucidated. As is visible in figure 2 and 3 the plunger 2 is provided with drain openings 10 and a drain plate 11. As is shown also the dish spring 9 is guided by a pin 12, which protrudes into cylindrical recesses 13 and 14 in the board 5 and the press member 6 respectively.

In figures 2 and 3 the case is shown in which the spring 9 is compressed maximally. The length of the slits 4 is such that when the pin 8 is located at the lower side of the slits 4 the force exerted by spring 9 still is in the region that is acceptable for a good rind forming.

## Claims

1. Device for pressing curd to form cheese, provided with a number of cheese vats (1) and compressing plungers (2), a vertically movable actuating member (6) for said plungers (2), spring members (9) between the actuating member (6) and each plunger (2) and a means (8, 4) for each plunger for limiting the movement of the plunger with respect to said actuating member, such that the spring means are mechanically biased, characterized in that the actuating member is provided with two vertically downwardly extending first wall shaped legs (7) for each plunger, that each plunger is provided with two vertically upwardly extending second wall shaped legs (3) adjacent and parallel to said first legs and that in the first or the second legs a vertically extending slit (4) is present, wherewith the second or first legs respectively are provided with a horizontal pin (8) protruding through said slits (4).

2. Device according to claim 1, characterized in that each set of two wall shaped first legs (7) are part of a U-shaped bracket mounted to the lower side of said actuation member (6), the horizontal pin (8) being mounted in said first legs (7) of the related bracket and said vertical slits, through which the pin passes, being applied in the said second legs, the said second legs being located within said first legs.

3. Device according to claim 1 or 2, characterized in that the spring means (9) consist of dish springs.

4. Device according to claim 3, characterized in that said dish springs (9) surround a guide rod (12) protruding into recesses (13, 14) in a member connected to said plunger (2) and/or said actuation member (6).

5. Device according to one or more of the preceding claims, characterized in that the spring means are biased such that they will yield in case of an equable load of the plungers before the maximum pressing force is exerted on said actuating member.

## Revendications

1. Presse à fromage, comprenant un certain nombre d'alvéoles à fromage (1) et de plongeurs-compresseurs (2), un mécanisme de commande (6) mobile verticalement actionnant lesdits plongeurs (2), des ressorts (9) montés entre le mécanisme de commande (6) et chaque plongeur (2) et un dispositif (8, 4) installé sur chaque plongeur pour limiter le mouvement dudit plongeur par rapport au mécanisme de commande, de façon à ce que le ressort soit mécaniquement contraint, caractérisée par le fait que le mécanisme de commande est équipé de deux premiers bras (7) en forme de cloison placés verticalement et orientés vers le bas pour chaque plongeur, par le fait que chaque plongeur est équipé de deux seconds bras (3) en forme de cloison, orientés verticalement vers le haut, adjacents et parallèles auxdits premiers bras, et par le fait qu'un premier ou second bras présente une fente (4) verticale, alors que les seconds ou premiers bras sont respectivement équipés d'un goujon horizontal (8) qui dépasse et qui pénètre dans lesdites fentes (4).

2. Presse à fromage selon la revendication 1, caractérisée par le fait que chaque jeu des deux premiers bras (7) en forme de cloison fait partie d'une équerre en forme de U installée sur la partie inférieure du mécanisme de commande (6), le goujon horizontal (8) étant fixé sur lesdits premiers bras (7) de l'équerre correspondante et lesdites fentes verticales dans lesquelles se déplace le goujon étant ménagées dans les second bras, les second bras étant placés à l'intérieur des premiers.

3. Presse à fromage selon les revendications 1 ou 2, caractérisée par le fait que le ressort (9) est constituée de ressorts élémentaires en coupelle.

4. Presse à fromage selon la revendication 3, caractérisée par le fait que les ressorts en coupelle (9) entourent une tige de guidage (12) dépassant dans des creux (13, 14) d'un organe relié audit plongeur (2) et/ou au mécanisme de commande (6).

5. Presse à fromage selon l'une quelconque des revendications 1 à 4, caractérisée par le fait que le ressort est contraint de manière à céder au cas où une charge égale serait appliquée sur les plongeurs avant que la force de compression maximale ne soit exercée sur ledit mécanisme de commande.

## Patentansprüche

1. Vorrichtung zum Pressen von Quark um Käse zu bilden, die mit einer Zahl Käseformen (1) und Presskolben (2), einem senkrecht bewegbaren Bedienungsteil (6) für die genannten Kolben (2), Federteilen (9) zwischen den Bedienungsteil (6) und jedem Kolben (2) und einen Mittel (8, 4) für jeden Kolben zur Begrenzung der Bewegung des Kolbens hinsichtlich dem Bedienungsteil versehen, ist derert dass die Federmittel mechanisch vorgespannt sind, dadurch gekennzeichnet, dass der Bedienungsteil für jeden Kolben mit zwei sich senkrecht nach unten erstreckenden ersten wandförmigen Beinen (7) versehen ist, dass jeder Kolben mit zwei sich nach oben erstreckenden zweiten wandförmigen Beinen (3) in der Nähe von und parallel zu den ersten Beinen versehen ist, und dass in den ersten oder den zweiten Beinen ein sich senkrecht erstreckender Schlitz (4) anwesend ist, wobei die zweiten bezugsweise ersten Beinen mit einem horizontalen Bolzen (8) der durch die genannten Schlitze (4) steckt, versehen sind.

2. Vorrichtung nach Anspruch 1, dadurch gekennzeichnet, dass jedes Paar von zwei wandförmigen ersten ersten Beinen (7) Teil eines U-förmigen Bügels, der an der Unterseite des genannten Bedienungsteil (6) befestigt ist, wobei der horizontale Bolzen (8) in den genannten ersten Beinen (7) des diesbezüglichen Bügels montiert sind und die vertikalen Schlitze, durch welche der Bolzen geht, in den genannten zweiten Beinen angeordnet sind, wobei die genannten zweiten Beine zwischen den genannten ersten Beinen angeordnet sind.

3. Vorrichtung nach Anspruch 1 oder 2, dadurch gekennzeichnet, dass die Federmittel (9) Schüsselfedern sind.

4. Vorrichtung nach Anspruch 3, dadurch gekennzeichnet, dass die genannten Schüsselfedern (9) eine Führungsstange (12) die in Aussparungen (13, 14) in einem Teil der mit dem genannten Kolben (2) und/oder dem genannten Bedienungsteil (6) verbulden ist, umgeben.

5. Vorrichtung nach einem oder mehreren der vorangehenden Ansprüche, dadurch gekennzeichnet dass die Federmittel vorgespannt sind, derart dass sie nachgeben im Falle einer gleichmässigen Belastung der Kolben bevor die maximale Presskracht auf den genannten Bedienungsteil ausgeübt wird.

# FIG.1

# FIG.2

# FIG.3